# EUROPEAN PATENT SPECIFICATION

(11) **EP 3 856 537 B1**
(45) Date of publication and mention of the grant of the patent: **13.12.2023**
(21) Application number: 18934995.4
(22) Date of filing: 28.09.2018
(51) Int. Cl.: B60C 11/24, B60C 11/13

(54) **A TIRE WITH A TEXTURE IN A GROOVE**
REIFEN MIT EINER TEXTUR IN EINER RILLE
PNEU AVEC UNE TEXTURE DANS UNE RAINURE

(43) Date of publication of application: 04.08.2021
(73) Proprietor: COMPAGNIE GENERALE DES ETABLISSEMENTS MICHELIN, 63000 Clermont-Ferrand (FR)
(72) Inventor: NOMURA, Masayoshi, Tokyo 163-1073 (JP); SEII, Tomohiro, Tokyo 163-1073 (JP)
(74) Representative: M.F.P. Michelin
(86) International application number: PCT/JP2018/036177
(87) International publication number: WO 2020/065904

(56) References cited:
- JP-A- H0 699 705
- JP-A- H06 239 108
- JP-A- S61 200 006
- JP-A- 2012 056 445
- JP-A- 2017 197 145
- JP-A- 2018 001 921
- US-A1- 2005 183 807
- US-A1- 2018 072 107

## Description

### Technical Field

The present invention relates to a tread for a tire, in particular to a tread provided with textures in a principal groove.

### Background Art

For both legal and safety reasons, a tire for use on public road is normally provided with a wear indicating mean in a groove indicating statutory wear limit. When the tire reaches to certain wear level, such the wear indicating mean appears on a top of a contact face as to be flush with the contact face.

As the wear indicating mean is a ridge at particular place in the groove, a rubber volume required during molding of the tire varies circumferentially which leads non uniformity of such the tire and potential molding defects due to insufficient rubber volume for molding the wear indicating mean. Also for finding a place where the wear indicating mean locates is sometimes difficult, and there is a desire to improve such non uniformity and accessibility to the wear indicating mean.

In order to improve non uniformity of the tread, it is known to keep a groove volume contained in a pitch (a repeating design unit) per unit length within predetermined range. And also in order to improve accessibility to the wear indicating mean, it is known to provide a texture in a groove and not on the wear indicating mean.

JPS61-200006 discloses a tire having an improved uniformity by adjusting a total volume of a groove in a pitch (repeating design unit) divided by a pitch length in a range from 0.9 to 1.1.

JPH06-099705 discloses a pneumatic tire provided with plural grooves extending in the tire circumference direction and a number of grooves extending in the tire width direction formed in a tread surface, irregular parts of a height of less than 1.6mm are formed continuously in groove bottom parts of the grooves.

WO2015/135928 discloses a tire made of rubber material comprising a tread including a plurality of grooves, each groove having a groove base, walls surrounding the groove base, and transition areas between the walls and the groove base, all or part of the grooves include a texture that extends only on the groove base and on at least one portion of the transition areas associated with the groove base, the texture being in contrast with the rest of the tire.

WO2018/060586 discloses a tire comprising a tread, at least one groove, at least first and second wear indicators arranged in the groove, the groove comprising a texture that is of the same material as a bottom of the groove, the texture being an organized arrangement of a plurality of elements, the texture surrounding the wear indicator and contrasting with the contact surface of the wear indicator, and the groove comprising an area with no texture extending circumferentially between the first wear indicator and the second wear indicator. Other examples of tire treads are disclosed in US 2018 072107 A1 which discloses a tire comprising a tread, the tire comprising at least one groove, at least one wear indicator disposed in the groove, the wear indicator comprising a contact face intended to come into contact with a roadway when the tire reaches a wear limit, the groove comprising a texture produced integrally with a bottom of this groove, said texture surrounding the wear indicator and contrasting with the contact face of the wear indicator.

### Citation List

### Patent Literature

PTL 1: JPS61-200006
PTL 2: JPH06-099705
PTL 3: WO2015/135928
PTL 4: WO2018/060586

However with solutions disclosed in these documents, improvement of non uniformity and accessibility to the wear indicating mean is not satisfactory, and there is a desire to further improvement of non uniformity and accessibility to the wear indicating mean simultaneously.

Therefore, there is a need for a tread for a tire which provides improvement of non uniformity and accessibility to the wear indicating mean at the same time.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

It is thus an object of the invention to provide improved non uniformity and accessibility to the wear indicating mean at the same time.

### Summary of Invention

The present invention provides a tread as well as a tire as defined in the appended claims. According to one aspect of the present invention, there is provided a tread for a tire having a contact face intended to come into contact with ground during rolling, the tread comprising a plurality of repeating design units successively placed in circumferential orientation, the plurality of repeating design unites having at least two different circumferential length Lp, each the plurality of repeating design units comprising at least one principal groove opening to the contact face, the at least one principal groove comprising two opposed wall surfaces being connected by bottom surface, at least four repeating design units comprising a wear indicating mean in the principal groove provided as to decrease a depth of the principal groove at least partly, the principal groove in the repeating design units without the wear indicating mean is provided with a texture at least partly on the two opposed wall surfaces and/or the bottom surface, and the texture comprises a plurality of elements that protrude from and/or are recessed into two opposed wall surfaces and/or the bottom surface, and the principal groove in the repeating design units containing the wear indicating mean has a region around the wear indicating mean devoid of the texture.

This arrangement provides improved non uniformity and accessibility to the wear indicating mean at the same time.

Since the principal groove in the repeating design units without the wear indicating mean is provided with the texture at least partly on the two opposed wall surfaces and/ or the bottom surface, and the principal groove in the repeating design units containing the wear indicating mean has a region around the wear indicating mean devoid of the texture, the texture in the principal groove of the repeating design unit without the wear indicating mean creates contrast not only with the contact face of the tread but also with the region around the wear indicating mean in the principal groove provided with the wear indicating mean which is much more wider area than just with a top face of the wear indicating mean, accessibility to the wear indicating mean can be improved as it is easy to find in which part of the principal groove is provided with the wear indicating mean.

Since the texture comprises the plurality of elements that protrude from and/or are recessed into two opposed wall surfaces and/or the bottom surface, a volume of the principal groove decreased by the wear indicating mean on the repeating design unit provided with the wear indicating mean is able to compensate with the texture provided in the principal groove on the repeating design unit without the wear indicating mean, non uniformity can be improved at the same time.

According to another aspect, a border of the region around the wear indicating mean in the repeating design unit containing the wear indicating mean is at least equal to 3.0mm distant from an intersection between the wear indicating mean and the bottom surface of the principal groove in a direction the principal groove being extending.

If the border of the region around the wear indicating mean in the repeating design unit containing the wear indicating mean is less than 3.0mm distant from an intersection between the wear indicating mean and the bottom surface of the principal groove, there is a risk that the accessibility to the wear indicating mean decreases as an area of the principal groove with texture becomes too wide compare to an area without the texture around the wear indicating mean. By setting this border of the region around the wear indicating mean in the repeating design unit containing the wear indicating mean at least equal to 3.0mm distance from an intersection between the wear indicating mean and the bottom surface of the principal groove, it is possible to improve accessibility to the wear indicating mean.

This border of the region around the wear indicating mean in the repeating design unit containing the wear indicating mean is preferably at least equal to 5.0mm distant from the intersection between the wear indicating mean and the bottom surface of the principal groove in the direction the principal groove being extending.

According to another aspect, a distance Lt between two adjacent elements of the texture in a direction the principal groove being extending in each the repeating design unit is proportional to the circumferential length Lp of the repeating design unit.

According to this arrangement, it is possible to improve esthetics of the tread by providing different visual impression of the principal groove provided with the texture while improving non uniformity and accessibility to the wear indicating mean.

According to another aspect, a size of each the elements of the texture in each the repeating design unit is proportional to the circumferential length Lp of the repeating design unit.

According to this arrangement, it is possible to improve esthetics of the tread by providing different visual impression of the principal groove provided with the texture while improving non uniformity and accessibility to the wear indicating mean.

According to another aspect, the texture comprises the plurality of elements that protrude from two opposed wall surfaces and/or the bottom surface, and a volume of the texture in one repeating design unit divided by the circumferential length Lp of the repeating design unit is from 85 to 115% of a volume of the wear indicating mean divided by the circumferential length Lp of the repeating design unit.

According to this arrangement, it is possible to improve the non uniformity effectively as the plurality of elements protruding from surfaces of the principal groove can easily be arranged for compensating the volume of the wear indicating mean.

If this volume of the texture in one repeating design unit divided by the circumferential length Lp of the repeating design unit is less than 85% or more than 115% of the volume of the wear indicating mean divided by the circumferential length Lp of the repeating design unit, there is a risk that non uniformity cannot be improved as compensation of the volume of the wear indicating mean by the texture would be inappropriate. By setting this volume of the texture in one repeating design unit divided by the circumferential length Lp of the repeating design unit from 85 to 115% of the volume of the wear indicating mean divided by the circumferential length Lp of the repeating design unit, it is possible to improve non uniformity of the tread.

This volume of the texture in one repeating design unit divided by the circumferential length Lp of the repeating design unit is preferably from 95 to 105% of the volume of the wear indicating mean divided by the circumferential length Lp of the repeating design unit, more preferably from 97 to 103% of the volume of the wear indicating mean divided by the circumferential length Lp of the repeating design unit.

According to another aspect, the principal groove is a circumferentially continuous groove.

According to this arrangement, it is possible to provide further improvement on accessibility to the wear indicating mean as the principal groove without the texture on the repeating design unit with the wear indicating mean is more emphasized.

### Advantageous Effects of Invention

According to the arrangement described above, it is possible to provide improved non uniformity and accessibility to the wear indicating mean at the same time.

### Brief Description of Drawings

Other characteristics and advantages of the invention arise from the description made hereafter in reference to the annexed drawings which show, as nonrestrictive examples, the embodiment of the invention.

In these drawings:
[fig.1]Fig. 1 is a schematic plan view of a tread according to the first embodiment of the present invention;
[fig.2]Fig. 2 is a schematic cross sectional view taken along line II-II in Fig. 1; [fig.3]Fig. 3 is an enlarged schematic view showing a portion indicated as III in Fig. 1; [fig.4]Fig. 4 is a schematic plan view of a tread according to the second embodiment of the present invention;
[fig.5]Fig. 5 is an enlarged schematic view showing a portion indicated as V in Fig. 4;
[fig.6]Fig. 6 is an enlarged schematic view showing a portion indicated as VI in Fig. 4; [fig.7]Fig. 7 is an enlarged schematic view showing a portion indicated as VII in Fig. 4;
[fig.8]Fig. 9 is an enlarged schematic view according to the third embodiment showing a portion corresponding to Fig. 5;
[fig.9]Fig. 9 is an enlarged schematic view according to the third embodiment showing a portion corresponding to Fig. 6;
[fig. 10]Fig. 10 is an enlarged schematic view according to the third embodiment showing a portion corresponding to Fig. 7;

### Description of Embodiments

Preferred embodiment of the present invention will be described below referring to the drawings.

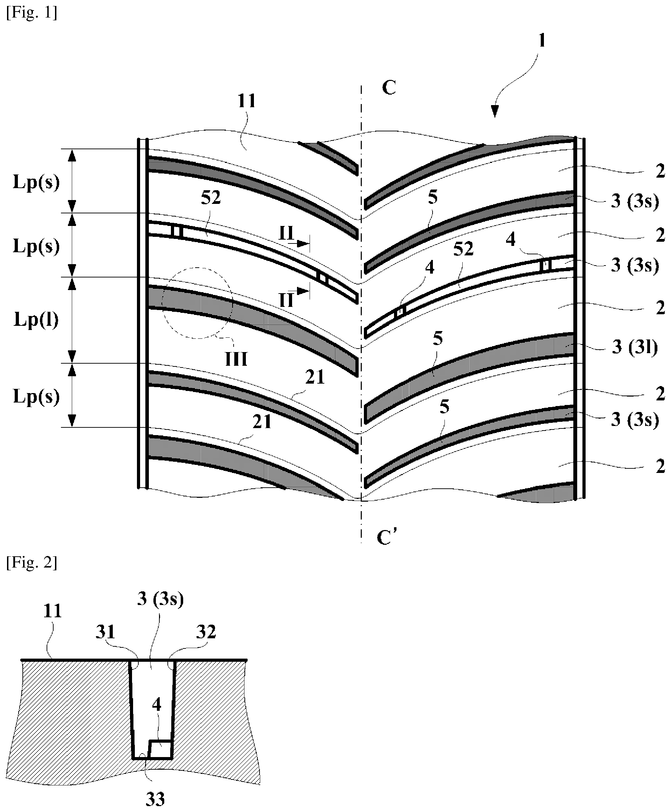

A tread 1 for a tire according to a first embodiment of the present invention will be described referring to Figs. 1, 2 and 3.

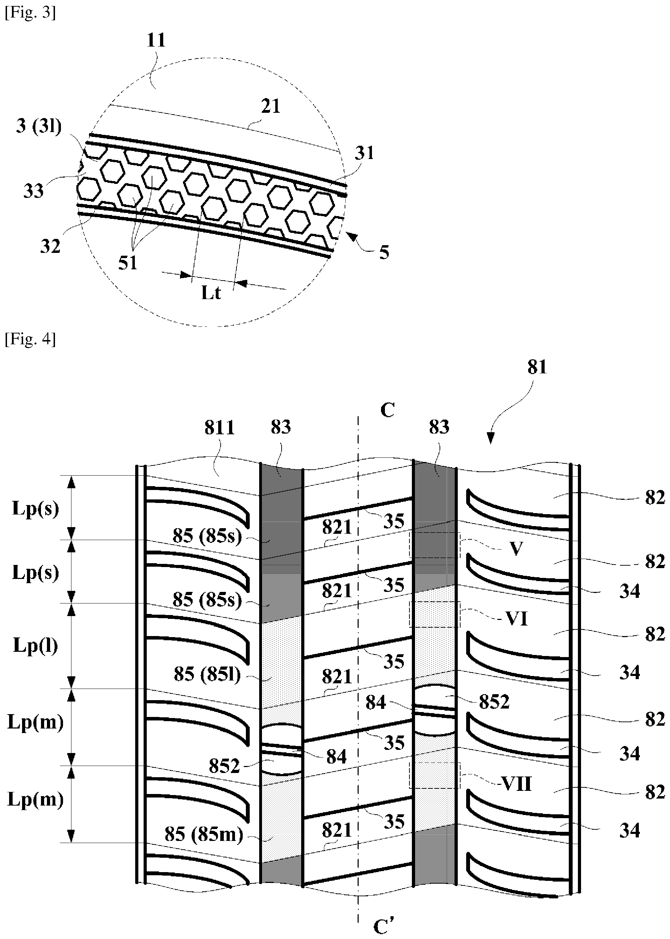

Fig. 1 is a schematic plan view of a tread according to the first embodiment of the present invention. Fig. 2 is a schematic cross sectional view taken along line II-II in Fig. 1. Fig. 3 is an enlarged schematic view showing a portion indicated as III in Fig. 1.

The tread 1 for a tire having dimension 205/55R16 and comprises a contact face 11 intended to come into contact with ground during rolling and a plurality of repeating design units 2 successively placed in circumferential orientation that is an orientation a line C-C' is extending, the plurality of repeating design units 2 having two different circumferential length Lp (Lp(s), Lp(1)), and the repeating design units 2 having shorter circumferential length have the circumferential length Lp(s), and the repeating design units 2 having longer circumferential length have the circumferential length Lp(1). Each the repeating design unit 2 is in close contact with circumferentially adjacent repeating design unit 2 at an intersection of the repeating design unit 21.

As shown in Fig. 1, each the plurality of repeating design units 2 comprising two principal grooves 3 (3s, 31) opening to the contact face 11 and extending from around a center of the tread 1 toward axially outward of the tread 1 in curved manner, a width of the principal grooves 3 (3s, 31) is gradually increasing toward axially outward of the tread 1. The principal groove 3 (3s, 31) has different width in relation with the circumferential length Lp (Lp(s), Lp(1)), the principal groove 3 (3s, 31) in the repeating design unit 2 with the circumferential length Lp(s) has narrower principal groove width compare to the principal groove 3 (3s, 31) in the repeating design unit 2 with the circumferential length Lp(1), the principal groove 3 (3s, 31) comprising two opposed wall surfaces 31, 32 being connected by bottom surface 33 (shown in Figs. 2 & 3).

As shown in Fig. 1, some of the repeating design units 2 comprising a wear indicating mean 4 in the principal groove 3 provided as to decrease a depth of the principal groove 3 at least partly (shown in Fig. 2). The tread 1 comprises at least four repeating design units 2 provided with the wear indicating mean 4 in the principal groove 3. In this first embodiment, two wear indicating means 4 extending substantially in circumferential orientation are provided in one principal groove 3, and as the one repeating design unit 2 contains two principal groove 3, four wear indicating means 4 are provided in one single repeating design unit 2.

The wear indicating mean 4 is a mean to indicate that the tread 1 reaches to certain wear level by appearing on a top of the contact face 11 as to be flush with the contact face 11, that is known as a "tread wear indicator (TWI)" indicating statutory wear limit which is, for example 1.6mm for passenger car tire in many countries.

As shown in Fig. 1, the principal groove 3 in the repeating design unit 2 without the wear indicating mean 4 is provided with a texture 5 at least partly on the two opposed wall surfaces 31, 32 and/or the bottom surface 33, and the principal groove 3 in the repeating design unit 2 containing the wear indicating mean 4 has a region 52 around the wear indicating mean 4 devoid of the texture 5.

As shown in Fig. 2, the wear indicating mean 4 is extending from the bottom surface 33 of the principal groove 3 (3s) as to decrease the depth of the principal groove 3 (3s).

As shown in Fig. 3, the texture 5 comprises a plurality of elements 51 that protrude from and/or are recessed into two opposed wall surfaces 31, 32 and/or the bottom surface 33, with a distance Lt between two adjacent elements 51 of the texture 5 in a direction the principal groove 3 being extending. In this first embodiment, the elements 51 protrude from the bottom surface 33 having hexagonal shape.

Since the principal groove 3 in the repeating design units 2 without the wear indicating mean 4 is provided with the texture 5 at least partly on the two opposed wall surfaces 31, 32 and/or the bottom surface 33, and the principal groove 3 in the repeating design units 2 containing the wear indicating mean 4 has a region 52 around the wear indicating mean 4 devoid of the texture, the texture 5 in the principal groove 3 of the repeating design unit 2 without the wear indicating mean 4 creates contrast not only with the contact face 11 of the tread 1 but also with the region 52 around the wear indicating mean 4 in the principal groove 3 provided with the wear indicating mean 4 which is much more wider area than just with a top face of the wear indicating mean 4, accessibility to the wear indicating mean 4 can be improved as it is easy to find in which part of the principal groove 3 is provided with the wear indicating mean 4.

Since the texture 5 comprises the plurality of elements 51 that protrude from and/or are recessed into two opposed wall surfaces 31, 32 and/or the bottom surface 33, a volume of the principal groove 3 decreased by the wear indicating mean 4 on the repeating design unit 2 provided with the wear indicating mean 4 is able to compensate with the texture 5 provided in the principal groove 3 on the repeating design unit 2 without the wear indicating mean 4, non uniformity can be improved at the same time.

The width of each the principal groove 3 may be constant in one repeating design unit 2, and/or may be constant among repeating design units 2.

The tread 1 may be provided with a groove, an incision (sipe), a hole or a like other than the principal groove 3.

A shape of the elements 51 of the texture may be any form, triangle, quadrangle, pentagonal, heptagonal, octagonal or polygonal, or combination of these shapes.

Each the two principal groove 3 in one single repeating design unit 2 may have different texture 5 and/or different elements 51 one another.

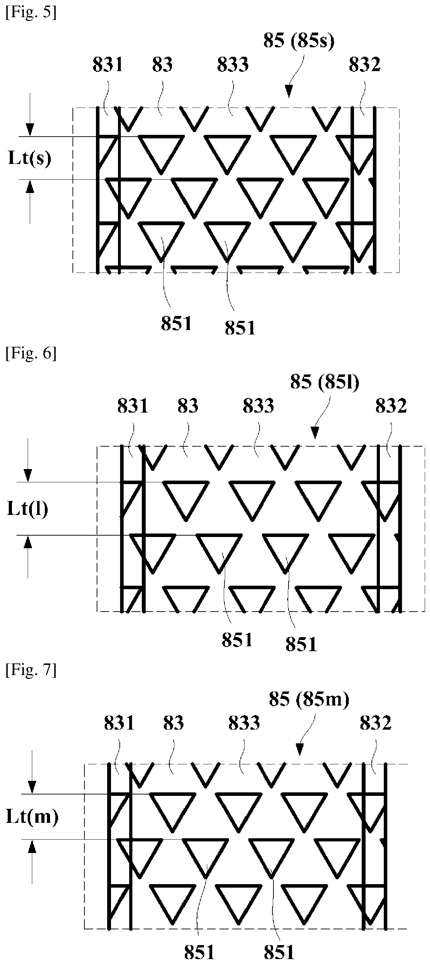

A tread 81 for a tire according to a second embodiment of the present invention will be described referring to Figs. 4, 5, 6 and 7. Fig. 4 is a schematic plan view of a tread according to the second embodiment of the present invention. Fig. 5 is an enlarged schematic view showing a portion indicated as V in Fig. 4. Fig. 6 is an enlarged schematic view showing a portion indicated as VI in Fig. 4. Fig. 7 is an enlarged schematic view showing a portion indicated as VII in Fig. 4. The construction of this second embodiment is similar to that of the first embodiment other than the arrangement shown in Figs. 4, 5, 6 and 7, thus description will be made referring to Figs. 4, 5, 6 and 7.

As shown in Fig. 4, the tread 81 having a contact face 811 comprising a plurality of repeating design units 82 successively placed in circumferential orientation that is an orientation a line C-C' is extending, the plurality of repeating design units 82 having three different circumferential length Lp (Lp(s), Lp(m), Lp(1)), and the repeating design units 82 having shorter circumferential length have the circumferential length Lp(s), the repeating design units 82 having intermediate circumferential length have the circumferential length Lp(m),and the repeating design units 82 having longer circumferential length have the circumferential length Lp(1). Each the repeating design unit 82 is in close contact with circumferentially adjacent repeating design unit 82 at an intersection of the repeating design unit 821.

As shown in Fig. 4, each the plurality of repeating design units 82 comprising two principal grooves 83, the two principal grooves 83 are circumferentially continuous grooves. The principal groove 83 dividing the tread 81 axially in three parts substantially evenly, two shoulder regions positioned axially outward and a center region sandwiched by the two shoulder regions. Each the shoulder region is provided with a sub groove 34 extending from axially inward of the shoulder region toward axially outward of the tread 81, and the center region is provided with an incision (a sipe) 35 extending substantially parallel to the intersection 821 in whole width of the center region. A width of the sub groove 34 is proportional to the circumferential length Lp of the repeating design unit 82.

As shown in Fig. 4, some of the repeating design units 82 comprising a wear indicating mean 84 in the principal groove 83 provided as to decrease a depth of the principal groove 83. In this second embodiment, two wear indicating means 84 extending substantially in axial orientation are provided in each the principal groove 83.

As shown in Fig. 4, the principal groove 83 in the repeating design unit 82 without the wear indicating mean 84 is provided with a texture 85 at least partly on the two opposed wall surfaces 831, 832 and/or the bottom surface 833 (shown in Figs 5, 6 and 7), and the principal groove 83 in the repeating design unit 82 containing the wear indicating mean 84 has a region 852 around the wear indicating mean 84 devoid of the texture 85. Different textures 85 (85s, 85m, 851) are provided depend upon the circumferential length Lp (Lp(s), Lp(m), Lp(1)) of the repeating design unit 82.

As shown in Fig. 4, two borders of the region 852 around the wear indicating mean 84 in the repeating design unit 82 containing the wear indicating mean 84 have a convex arched shape toward two extending orientation of the principal groove 83, axially symmetrically about the wear indicating mean 84. The region 852 around the wear indicating mean 84 is devoid of the texture, and a region other than the region 852 is provided with the texture 85 corresponding to the circumferential length Lp of the repeating design unit 82. In this second embodiment, the region other than the region 852 is provided with the texture 85 corresponding to the texture 85m corresponding to the circumferential length Lp(m) of the repeating design unit 82 containing the wear indicating mean 84.

As shown in Figs. 5 to 7, the texture 85 (85s, 85m, 851) comprises a plurality of elements 851 that protrude from two opposed wall surfaces 831, 832 and the bottom surface 833 having triangular shape, with a distance Lt (Lt(s), Lt(m), Lt(1)) between two adjacent elements 851 of the texture 85 (85s, 85m, 851) in a direction the principal groove 83 being extending. The distance Lt (Lt(s), Lt(m), Lt(1)) is proportional to the circumferential length Lp of the repeating design unit 82. Longer the circumferential length Lp of the repeating design unit 82 becomes longer the distance Lt between two adjacent elements 851 of the texture 85 in the direction the principal groove 83 being extending.

A volume of the texture 85 in one repeating design unit 82 divided by the circumferential length Lp of the repeating design unit 82 is in a range from 85 to 115% of a volume of the wear indicating mean 84 divided by the circumferential length Lp of the repeating design unit 82.

Since the texture 85 comprises the plurality of elements 851 that protrude from two opposed wall surfaces 831, 832 and/or the bottom surface 833, and a volume of the texture 85 in one repeating design unit 82 divided by the circumferential length Lp of the repeating design unit 82 is from 85 to 115% of a volume of the wear indicating mean 84 divided by the circumferential length Lp of the repeating design unit 82, it is possible to improve the non uniformity effectively as the plurality of elements 851 protruding from surfaces of the principal groove 83 can easily be arranged for compensating the volume of the wear indicating mean 84.

If this volume of the texture 85 in one repeating design unit 82 divided by the circumferential length Lp of the repeating design unit 82 is less than 85% or more than 115% of the volume of the wear indicating mean 84 divided by the circumferential length Lp of the repeating design unit 82, there is a risk that non uniformity cannot be improved as compensation of the volume of the wear indicating mean 84 by the texture 85 would be inappropriate.

This volume of the texture 85 in one repeating design unit 82 divided by the circumferential length Lp of the repeating design unit is preferably from 95 to 105% of the volume of the wear indicating mean 84 divided by the circumferential length Lp of the repeating design unit 82, more preferably from 97 to 103% of the volume of the wear indicating mean 84 divided by the circumferential length Lp of the repeating design unit 82.

Since the border of the region 852 around the wear indicating mean 84 in the repeating design unit 82 containing the wear indicating mean 84 is at least equal to 3.0mm distant from the intersection between the wear indicating mean 84 and the bottom surface 833 of the principal groove 83 in the direction the principal groove 83 being extending, it is possible to improve accessibility to the wear indicating mean.

If the border of the region 852 around the wear indicating mean 84 in the repeating design unit 82 containing the wear indicating mean 84 is less than 3.0mm distant from an intersection between the wear indicating mean 84 and the bottom surface 833 of the principal groove 83, there is a risk that the accessibility to the wear indicating mean 84 decreases as an area of the principal groove 83 with texture 85 becomes too wide compare to an area without the texture 85 around the wear indicating mean 84.

This border of the region 852 around the wear indicating mean 84 in the repeating design unit 82 containing the wear indicating mean 84 is preferably at least equal to 5.0mm distant from the intersection between the wear indicating mean 84 and the bottom surface 833 of the principal groove 83 in the direction the principal groove 83 being extending.

Since the distance Lt between two adjacent elements 851 of the texture 85 in a direction the principal groove 83 being extending in each the repeating design unit 82 is proportional to the circumferential length Lp of the repeating design unit 82, it is possible to improve esthetics of the tread 81 by providing different visual impression of the principal groove 83 provided with the texture 85 while improving non uniformity and accessibility to the wear indicating mean 84.

Since the principal groove 83 is a circumferentially continuous groove, it is possible to provide further improvement on accessibility to the wear indicating mean 84 as the principal groove 83 without the texture 85 on the repeating design unit 82 with the wear indicating mean 84 is more emphasized.

The region 852 may be provided with an asymmetric manner about the wear indicating mean 84, and the shape of the border of the region 852 may be in straight, curved, waved, zigzagged manner, or combination of these manners.

In case two regions other than the region 852 are provided in one principal groove 83 in one single repeating design unit 82, the texture 85 and/or the elements 851 in the texture 85 may be different in one region to another region.

In case more than two principal grooves 83 are provided in one single repeating design unit 82, the texture 85 and/or the elements 851 in the texture 85 may be different among the principal grooves 83.

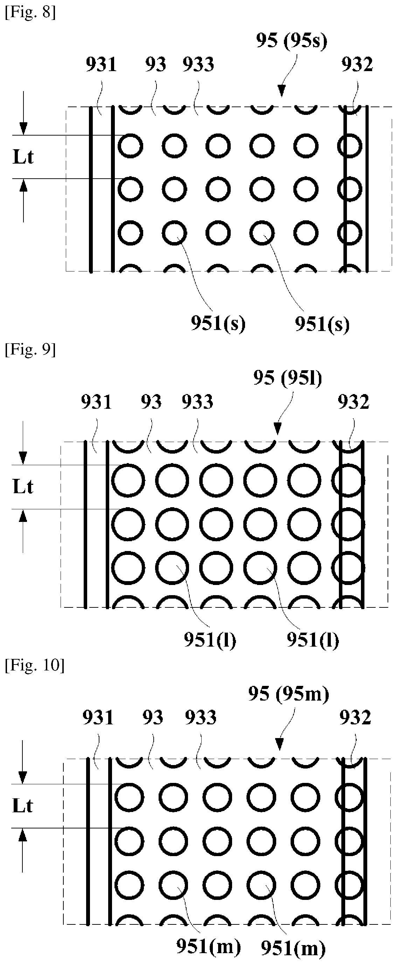

A tread for a tire according to a third embodiment of the present invention will be described referring to Figs. 8, 9 and 10. Fig. 9 is an enlarged schematic view according to the third embodiment showing a portion corresponding to Fig. 5. Fig. 9 is an enlarged schematic view according to the third embodiment showing a portion corresponding to Fig. 6. Fig. 10 is an enlarged schematic view according to the third embodiment showing a portion corresponding to Fig. 7. The construction of this third embodiment is similar to that of the first and the second embodiment other than the arrangement shown in Figs. 8, 9 and 10, thus description will be made referring to Figs. 8, 9 and 10.

As shown in Figs. 8 to 10, a texture 95 (95s, 95m, 951) comprises a plurality of elements 951 (951s, 951m, 9511) that protrude from one of two opposed wall surface 932 (and not on another one of two opposed wall surface 931) and a bottom surface 933 having circular shape, with a constant distance Lt between two adjacent elements 951 of the texture 95 (95s, 95m, 951) in a direction a principal groove 93 being extending. A size of each the elements 951 (951s, 951m, 9511) of the texture 95 in each the repeating design unit (not shown) is proportional to a circumferential length Lp of the repeating design unit (not shown). Longer the circumferential length Lp of the repeating design unit (not shown) becomes larger the size of the elements 951 of the texture 95.

Since the size of each the elements 951 (951s, 951m, 9511) of the texture 95 in each the repeating design unit is proportional to the circumferential length Lp of the repeating design unit (not shown), it is possible to improve esthetics of the tread by providing different visual impression of the principal groove 93 provided with the texture 95 while improving non uniformity and accessibility to the wear indicating mean (not shown).

### Reference Signs List

1, 81 tread
11, 811 contact face
2, 82 repeating design unit
21, 821 intersection of the repeating design unit
3, 3s, 31, 83, 93 principal groove
31, 32, 831, 832, 931, 932 opposed wall surface
33, 833, 933 bottom surface
34 sub groove
35 incision
4, 84 wear indicating mean
5, 85, 85s, 85m, 851, 95, 95s, 95m, 951 texture
51, 851, 951, 951s, 951m, 9511 element of texture
52, 852 region around wear indicating mean

## Claims

1. A tread (1) for a tire having a contact face (11) intended to come into contact with ground during rolling, the tread (1) comprising a plurality of repeating design units (2) successively placed in circumferential orientation,
each the plurality of repeating design units (2) comprising at least one principal groove (3) opening to the contact face (11), the at least one principal groove (3) comprising two opposed wall surfaces (31, 32) being connected by bottom surface (33),
at least four repeating design units (2) comprising a wear indicating mean (4) in the principal groove (3) provided as to decrease a depth of the principal groove (3) at least partly,
the principal groove (3) in the repeating design units (2) without the wear indicating mean (4) being provided with a texture (5) at least partly on the two opposed wall surfaces (31, 32) and/or the bottom surface (33), the texture (5) comprising a plurality of elements (51) that protrude from and/or are recessed into two opposed wall surfaces (31, 32) and/or the bottom surface (33), the principal groove (3) in the repeating design units (2) containing the wear indicating mean (4) having a region (52) around the wear indicating mean (4) devoid of the texture (5),
the tread (1) being **characterized in that** the plurality of repeating design units (2) have at least two different circumferential lengths Lp, **in that**
the texture (5) comprises the plurality of elements (51) that protrude from two opposed wall surfaces (31, 32) and/or the bottom surface (33), and **in that** a volume of the texture (5) in one repeating design unit (2) divided by the circumferential length Lp of the repeating design unit (2) is from 85 to 115% of a volume of the wear indicating mean (4) divided by the circumferential length Lp of the repeating design unit (2).

2. The tread (1) according to Claim 1, **wherein** a border of the region (52) around the wear indicating mean (4) in the repeating design unit (2) containing the wear indicating mean (4) is at least equal to 3.0mm distant from an intersection between the wear indicating mean (4) and the bottom surface (33) of the principal groove (3) in a direction the principal groove (3) being extending.

3. The tread (1) according to Claim 1 or Claim 2, **wherein** a distance Lt between two adjacent elements (51) of the texture (5) in a direction the principal groove (3) being extending in each the repeating design unit (2) is proportional to the circumferential length Lp of the repeating design unit (2).

4. The tread (1) according to any one of the Claims 1 to 3, **wherein** a size of each the elements (51) of the texture (5) in each the repeating design unit (2) is proportional to the circumferential length Lp of the repeating design unit (2).

5. The tread (1) according to Claim 4, **wherein** the volume of the texture (5) in one repeating design unit (2) divided by the circumferential length Lp of the repeating design unit (2) is from 95 to 105% of the volume of the wear indicating mean (4) divided by the circumferential length Lp of the repeating design unit (2).

6. The tread (1) according to any one of the Claims 1 to 5, **wherein** the principal groove (3) is a circumferentially continuous groove.

7. A tire having a tread according to any one of the Claims 1 to 6.

## Patentansprüche

1. Lauffläche (1) für einen Reifen, der eine Kontaktfläche (11) aufweist, die dazu bestimmt ist, den Boden beim Rollen zu berühren, wobei die Lauffläche (1) mehrere sich wiederholende Gestaltungseinheiten (2) umfasst, die in Umfangsrichtung nacheinander platziert sind,
wobei jede der mehreren sich wiederholenden Gestaltungseinheiten (2) mindestens eine Hauptnut (3) umfasst, die sich zur Kontaktfläche (11) hin öffnet, wobei die mindestens eine Hauptnut (3) zwei einander entgegengesetzte Wandflächen (31, 32) umfasst, die durch eine Bodenfläche (33) miteinander verbunden sind,
wobei mindestens vier sich wiederholende Gestaltungseinheiten (2) eine Verschleißanzeigeeinrichtung (4) in der Hauptnut (3) umfassen, die dazu vorgesehen ist, die Tiefe der Hauptnut (3) zumindest teilweise zu verringern,
wobei die Hauptnut (3) in den sich wiederholenden Gestaltungseinheiten (2) ohne die Verschleißanzeigeeinrichtung (4) mit einer Struktur (5) zumindest teilweise an den zwei entgegengesetzten Wandflächen (31, 32) und/oder der Bodenfläche (33) versehen ist, wobei die Struktur (5) mehrere Elemente (51) umfasst, die von den zwei entgegengesetzten Wandflächen (31, 32) und/oder der Bodenfläche (33) vorstehen und/oder darin vertieft sind, wobei die Hauptnut (3) in den sich wiederholenden Gestaltungseinheiten (2), die die Verschleißanzeigeeinrichtung (4) enthalten, einen Bereich (52) ohne Struktur (5) um die Verschleißanzeigeeinrichtung (4) aufweisen,
wobei die Lauffläche (1) **dadurch gekennzeichnet ist, dass** die mehreren sich wiederholenden Gestaltungseinheiten (2) mindestens zwei verschiedene Umfangslängen Lp aufweisen, dass
die Struktur (5) die mehreren Elemente (51) umfasst, die von zwei entgegengesetzten Wandflächen (31, 32) und/oder der Bodenfläche (33) vorstehen, und dass das Volumen der Struktur (5) in einer sich wiederholenden Gestaltungseinheit (2) geteilt durch die Umfangslänge Lp der sich wiederholenden Gestaltungseinheit (2) 85 bis 115 % des Volumens der Verschleißanzeigeeinrichtung (4) geteilt durch die Umfangslänge Lp der sich wiederholenden Gestaltungseinheit (2) beträgt.

2. Lauffläche (1) nach Anspruch 1, wobei eine Begrenzung des Bereichs (52) um die Verschleißanzeigeeinrichtung (4) in der sich wiederholenden Gestaltungseinheit (2), die die Verschleißanzeigeeinrichtung (4) enthält, mindestens 3,0 mm von einer Schnittstelle zwischen der Verschleißanzeigeeinrichtung (4) und der Bodenfläche (33) der Hauptnut (3) in die Richtung, in die sich die Hauptnut (3) erstreckt, entfernt ist.

3. Lauffläche (1) nach Anspruch 1 oder Anspruch 2, wobei die Entfernung Lt zwischen zwei angrenzenden Elementen (51) der Struktur (5) in die Richtung, in die sich die Hauptnut (3) erstreckt, in jeder sich wiederholenden Gestaltungseinheit (2) proportional zur Umfangslänge Lp der sich wiederholenden Gestaltungseinheit (2) ist.

4. Lauffläche (1) nach einem der Ansprüche 1 bis 3, wobei die Größe jedes der Elemente (51) der Struktur (5) in jeder sich wiederholenden Gestaltungseinheit (2) proportional zur Umfangslänge Lp der sich wiederholenden Gestaltungseinheit (2) ist.

5. Lauffläche (1) nach Anspruch 4, wobei das Volumen der Struktur (5) in einer sich wiederholenden Gestaltungseinheit (2) geteilt durch die Umfangslänge Lp der sich wiederholenden Gestaltungseinheit (2) 95 bis 105 % des Volumens der Verschleißanzeigeeinrichtung (4) geteilt durch die Umfangslänge Lp der sich wiederholenden Gestaltungseinheit (2) beträgt.

6. Lauffläche (1) nach einem der Ansprüche 1 bis 5, wobei die Hauptnut (3) eine umlaufende durchgehende Nut ist.

7. Reifen, der eine Lauffläche nach einem der Ansprüche 1 bis 6 aufweist.

## Revendications

1. Bande de roulement (1) pour un pneu ayant une face de contact (11) destinée à entrer en contact avec le sol en roulant, la bande de roulement (1) comprenant une pluralité d'unités de tracé répétitives (2) placées successivement dans une orientation circonférentielle,
chacune de la pluralité d'unités de tracé répétitives (2) comprenant au moins une rainure principale (3) s'ouvrant sur la face de contact (11), l'au moins une rainure principale (3) comprenant deux surfaces de paroi opposées (31, 32) reliées par une surface inférieure (33),
au moins quatre unités de tracé répétitives (2) comprenant un moyen indicateur d'usure (4) dans la rainure principale (3) disposé de sorte à réduire au moins partiellement une profondeur de la rainure principale (3),
la rainure principale (3) dans les unités de tracé répétitives (2) sans le moyen indicateur d'usure (4) étant pourvue d'une texture (5) au moins en partie sur les deux surfaces de paroi opposées (31, 32) et/ou la surface inférieure (33), la texture (5) comprenant une pluralité d'éléments (51) qui font saillie depuis et/ou sont encastrés dans les deux surfaces de paroi opposées (31, 32) et/ou la surface inférieure (33), la rainure principale (3) dans les unités de tracé répétitives (2) contenant le moyen indicateur d'usure (4) ayant une région (52) autour du moyen indicateur d'usure (4) dépourvue de la texture (5),
la bande de roulement (1) étant **caractérisée en ce que** la pluralité d'unités de tracé répétitives (2) a au moins deux longueurs circonférentielles différentes Lp, **en ce que**
la texture (5) comprend la pluralité d'éléments (51) qui font saillie depuis deux surfaces de paroi opposées (31, 32) et/ou la surface inférieure (33), et **en ce que** le volume de la texture (5) dans une unité de tracé répétitive (2) divisé par la longueur circonférentielle Lp de l'unité de tracé répétitive (2) est compris entre 85 et 115 % du volume du moyen indicateur d'usure (4) divisé par la longueur circonférentielle Lp de l'unité de tracé répétitive (2).

2. Bande de roulement (1) selon la revendication 1, une limite de la région (52) autour du moyen indicateur d'usure (4) dans l'unité de tracé répétitive (2) contenant le moyen indicateur d'usure (4) étant au moins à une distance de 3,0 mm d'une intersection entre le moyen indicateur d'usure (4) et la surface inférieure (33) de la rainure principale (3) dans une direction dans laquelle la rainure principale (3) s'étend.

3. Bande de roulement (1) selon la revendication 1 ou la revendication 2, une distance Lt entre deux éléments (51) adjacents de la texture (5) dans une direction dans laquelle la rainure principale (3) s'étend dans chaque unité de tracé répétitive (2) étant proportionnelle à la longueur circonférentielle Lp de l'unité de tracé répétitive (2).

4. Bande de roulement (1) selon l'une quelconque des revendications 1 à 3, une taille de chacun des éléments (51) de la texture (5) dans chaque unité de tracé répétitive (2) étant proportionnelle à la longueur circonférentielle Lp de l'unité de tracé répétitive (2).

5. Bande de roulement (1) selon la revendication 4, le volume de la texture (5) dans une unité de tracé répétitive (2) divisé par la longueur circonférentielle Lp de l'unité de tracé répétitive (2) étant compris entre 95 et 105 % du volume du moyen indicateur d'usure (4) divisé par la longueur circonférentielle Lp de l'unité de tracé répétitive (2).

6. Bande de roulement (1) selon l'une quelconque des revendications 1 à 5, la rainure principale (3) étant une rainure circonférentiellement continue.

7. Pneu ayant une bande de roulement selon l'une quelconque des revendications 1 à 6.
